# EUROPEAN PATENT APPLICATION

(11) **EP 1 850 469 A1**
(43) Date of publication of application: **31.10.2007**
(21) Application number: 06713883.4
(22) Date of filing: 16.02.2006
(51) Int. Cl.: H02M 7/12, G05F 1/00, H02M 3/00

(54) **CONVERTER CONTROL APPARATUS**

(30) Priority: 18.02.2005 JP 2005042686
(71) Applicant: MITSUBISHI DENKI KABUSHIKI KAISHA, Chiyoda-ku, Tokyo 100-8310 (JP)
(72) Inventor: KAYANO, Hiroyuki, Chiyoda-ku, Tokyo 100-8310 (JP)
(74) Representative: Sajda, Wolf E.
(86) International application number: PCT/JP2006/302742
(87) International publication number: WO 2006/088097

(57) **Abstract**

A converter control apparatus comprises means (14, 15, 17) for detecting output powers of a plurality of converters (100) connected in parallel to a load; an arithmetic circuit (19) for calculating an average output power of the converters on the basis of the detected output powers, and an output power control circuit (18) for controlling the output power of each converter such that it is equal to the average output power. This prevents non-uniformity from occurring in supplying the power from each converter to the load and hence prevents any of the converters from exhibiting an overload condition beyond a rating range.

## Description

### Technical Field

The present invention relates to a control apparatus for power converters, and more particularly to a converter control apparatus which is used for converters for converting a power waveform.

### Background Art

AC power from a substation is input to a transformer through wiring and is converted into a suitable AC voltage therein, whereupon it is fed to a converter. The fed AC power is output as DC power of constant voltage by the converter. The DC power output from the converter is passed through a filter capacitor (for smoothing a DC voltage), thereby to be kept in a more stable constant-voltage state and to be fed to a load. In this regard, the DC power which is output from the converter increases or decreases in proportion to the fluctuation of a load capacity.
In the converter, therefore, the input power fed from the input side is converted into power which is equal to the output power fluctuating in proportion to the fluctuation of the load capacity, in order to keep the output state of the DC power at the constant voltage, and the resulting power is fed to the output side through a power waveform conversion circuit within the converter. Incidentally, the power waveform conversion circuit has its output power controlled by an output power control circuit.

A PWM (Pulse Width Modulation) control system, for example, has been generally employed to control the power waveform conversion circuit of the converter. The output power or voltage of the converter is controlled so as to increase or decrease in dependency on a PWM pulse width which is given to the power waveform conversion circuit. Besides, the PWM pulse width is determined on the basis of the input power and output power of the converter by the output power control circuit.
In short, the converter in the prior art keeps the voltage of the output side in the constant-voltage state by giving signals which have the information items of a voltage or current to be input to the converter and a voltage or current to be output from the converter, to the output power control circuit within the converter, thereby to calculate the PWM pulse width which can equalize the power of the input side and the power of the output side, subsequently giving a signal which has the information of the PWM pulse width, to a switching element within the power waveform conversion circuit, and thereby to drive and control the power waveform conversion circuit by the PWM system (refer to, for example, Patent Document 1).

Patent Document 1: JP-A-11-32486 (Paragraph 0002, and Figs. 2, 3 and 4)

### Disclosure of the Invention

### Problem that the Invention is to Solve

So-called "errors between individuals" inhere in electric components, circuit constants, etc. constituting respective converters, so that even in case of the converters of the same type, differences appear in the transient response characteristics thereof. Accordingly, in a case where a plurality of converters are connected in parallel with a load whose load capacity fluctuates, so as to feed powers to the load, there is the problem that an unbalance occurs in the power feeds from the respective converters to the load, on account of the errors between the individuals, and some of the converters are brought into an overload state.

In order to solve the above problem, and to prevent some of the plurality of converters from leading to an overload state, in a case where the converters are connected in parallel with a load so as to feed powers to the load, the present invention has an object to provide a converter control apparatus which equalizes output powers that are output from all the converters.

Another object of the present invention is to provide a converter control apparatus in which output powers that are output from all converters are equalized to distributed output powers within rated ranges of the converters.

### Means for Solving the Problem

In order to correct the unbalance of the load balance of a plurality of converters which occurs when the converters are connected in parallel with a load, a converter control apparatus in the present invention is characterized by being provided with means for detecting output powers of the individual converters, an arithmetic circuit which calculates average output power of the individual converters on the basis of the detected output powers, and output power control circuits which control the output powers of the individual converters so as to equalize to the average output power.

Besides, a converter control apparatus of the invention is characterized by being provided with means for detecting output powers of the individual converters, an arithmetic circuit which calculates load power from the detected output powers and which calculates individual distributed output powers for distributing powers equal to the load power, within rated ranges of the individual converters, and output power control circuits which control the output powers of the individual converters so as to equalize to the respective distributed output powers.

### Advantage of the Invention

In a case where power is fed by connecting a plurality of converters in parallel with a load, by employing the converter control apparatus of the present invention which is provided with the arithmetic circuit for calculating average output power (or distributed output powers) hitherto nonexistent, as stated above, powers to be output from all the converters can be equalized to the average output power (or distributed output powers), and some of the converters can be prevented from being overloaded, thereby to attain the advantage that the unbalance of the load balance of the individual converters can be eliminated.

### Best Mode for Carrying Out the Invention

### Embodiment 1:

Now, Embodiment 1 of the present invention will be described in detail with reference to the drawings.

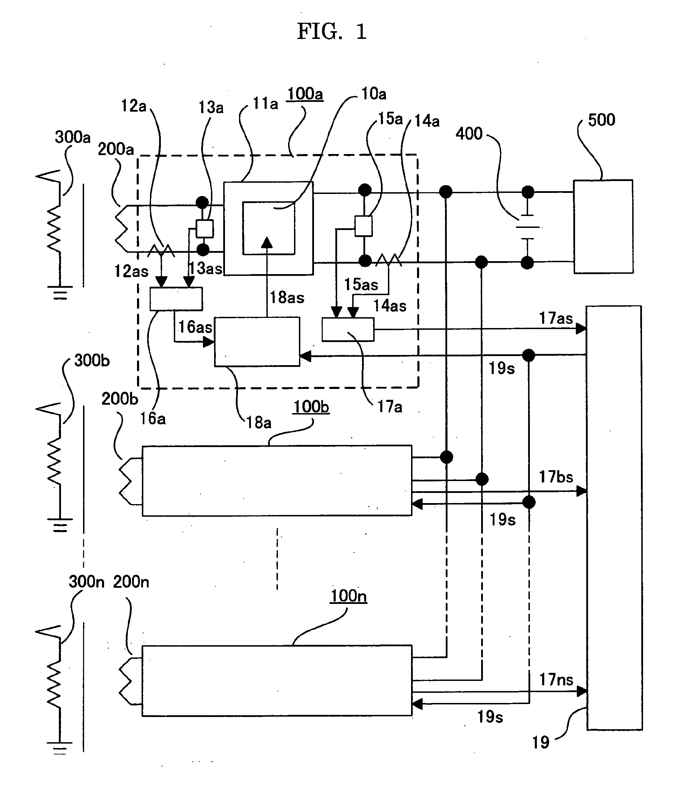

Fig. 1 is a schematic configurational circuit diagram of a power feed circuit which employs a converter control apparatus in Embodiment 1 of the invention and a plurality of converters.
Referring to Fig. 1, the plurality of converters 100a through 100n of identical type (in which device structures and ratings are the same) are fed with AC powers from a plurality of wirings 300a through 300n, through dedicated transformers 200a through 200n of the respective converters. DC powers which are output from the plurality of converters 100a through 100n are fed to a load 500, through a filter capacitor 400 which is connected in parallel.

Each of the converters 100 is configured of a part which is directly relevant to the power feed, and a signal processing part for controlling the output power. That part of the converter 100a which is relevant to the power feed is configured of a power waveform conversion circuit 11a which has a built-in switching circuit portion 10a based on a PWM control system, an AC current detector 12a and an AC voltage detector 13a which are disposed on the input side of the power waveform conversion circuit 11a (on the input side of the converter 100a), and a DC current detector 14a and a DC voltage detector 15a which are disposed on the output side thereof.
On the other hand, the signal processing part is configured of an input power calculation portion 16a which computes the power on the input side of the power waveform conversion circuit 11a, as well as an output power calculation portion 17a which computes the power on the output side, and a pulse width determination portion 18a which is an output power control circuit.
As will be stated in detail later, a pulse width signal 18as which corresponds to a PWM pulse width output from the pulse width determination portion 18a is input to the switching circuit portion 10a, so as to control the output power of the power waveform conversion circuit 11a in conformity with the PWM control system.

The AC power which is input to each converter 100a is calculated by inputting an AC current signal 12as from the AC current detector 12a and an AC voltage signal 13as from the AC voltage detector 13a, to the input power calculation portion 16a, and then multiplying these signals. Besides, the calculated AC power is output from the input power calculation portion 16a as an input power signal 16as. On the other hand, the DC power which is output from each of the converters 100a through 100n is calculated by inputting a DC current signal 14as from the DC current detector 14a and a DC voltage signal 15as from the DC voltage detector 15a, to the output power calculation portion 17a, and then multiplying these signals.
The calculated individual DC powers are output from the respective output power calculation portions 17a through 17n as output power signals 17as through 17ns. The output power signals 17as through 17ns are all input to a average processing portion 19 being an arithmetic circuit which calculates the average output power of the individual converters, and they are added up, whereupon the sum is divided by the number (n) of the converters attached to the load 500, whereby the average output power per converter is calculated and is output as a average output signal 19s.

The converter control apparatus in Embodiment 1 of the invention is configured of the signal processing parts (input power calculation portions 16a through 16n, output power calculation portions 17a through 17n, and pulse width determination portions 18a through 18n which are the output power control circuits) disposed in the respective converters 100a through 100n, and the average processing portion 19 of a feature of the invention which is the arithmetic circuit for calculating the average output power.
The average output signal 19s and the input power signal 16as are input to the pulse width determination portion 18a, and the PWM pulse width is calculated on the basis of these signals and is input to the switching circuit portion 10a as the pulse width signal 18as. Incidentally, the PWM pulse width is calculated so as to become a pulse width by which the input power to be input to the power waveform conversion circuit 11a can be equalized to the average output power. By the way, the PWM pulse width in the prior-art power feed circuit is calculated by using the output power, and the PWM pulse width in the invention is calculated by a similar method.

Thus, the pulse width signal 18as is input to the switching circuit portion 10a, and the converter 100a is controlled so that the output power (equal to the input power) and the average output power of the power waveform conversion circuit 11a become equal to each other. Since the other converters 100 each being identical in structure to the converter 100a are similarly controlled, the output powers output from the respective converters become equal to the average output power.
Accordingly, owing to the employment of the converter control apparatus in Embodiment 1 of the invention, it is possible to attain the advantage that the unbalance of the load balance of the individual converters can be eliminated. Besides, even when power waveforms applied from the individual transformers 200 to the corresponding converters 100 are different, the input powers are respectively measured, and the pulse widths are determined in adaptation to the respective converters 100 on each occasion.
Therefore, the invention has the remarkable advantage that the load balance of the individual converters becomes equal without depending upon the differences of the power waveforms. Incidentally, in the power feed circuit in Embodiment 1, the powers are fed to the individual transformers 200a through 200n by employing the plurality of wirings 300a through 300n. It is to be understood, however, that even in a case where power is fed from a common wiring to the individual transformers 200a through 200n, the load balance of the individual converters can be similarly equalized by employing the converter control apparatus of the invention.

### Embodiment 2:

Now, Embodiment 2 of the invention will be described in detail. In the power feed circuit employing the converter control apparatus in Embodiment 1 and the plurality of converters, the output power from each converter 100 is detected and calculated by employing the DC current detector 14 as well as the DC voltage detector 15 and the output power calculation portion 17 to be output as the output power signal 17s.
In contrast, a power feed circuit, not shown, which employs a converter control apparatus in Embodiment 2 of the invention and a plurality of converters has a configuration in which the DC voltage detector 15 is not disposed. By assuming that a DC voltage is a preset constant voltage, the output power of each converter 100 is calculated using only a DC current signal 14s which is detected by the DC current detector 14. The remaining configuration is the same as in the power feed circuit in Embodiment 1 of the invention.

Since each converter 100 is originally configured of a constant-voltage output circuit, its output voltage hardly changes in a short time on the order of the cycle of an input power source (the inverse number of a frequency applied to a transformer) though it changes gradually with the fluctuation of a load capacity. It is an output current that solely changes in the short time with the fluctuation of the load capacity.
It is accordingly to be understood that, in the power feed circuit in Embodiment 2 of the invention, almost the same circuit operations as in the power feed circuit in Embodiment 1 can be performed in spite of the omission of the DC voltage detector 15. With the power feed circuit in Embodiment 2 of the invention, therefore, it is possible to attain the advantage that the unbalance of the load balance of the individual converters 100 can be eliminated, without employing the DC voltage detectors 15.

### Embodiment 3:

Now, Embodiment 3 of the invention will be described in detail. In the power feed circuit employing the converter control apparatus in Embodiment 1 and the plurality of converters, the input power from each converter 100 is detected and calculated by employing the AC current detector 12, the AC voltage detector 13 and the AC power calculation portion 16, to be output as the input power signal 16s.
In contrast, a power feed circuit, not shown, which employs a converter control apparatus of Embodiment 3 of the invention and a plurality of converters has a configuration in which the AC voltage detector 13 is not disposed. By assuming that an AC voltage is a constant voltage previously set through a transformer 200, the input power is calculated by measuring only an AC current signal 12s which is detected by the AC current detector 12. The remaining configuration is quite the same as in the power feed circuit of Embodiment 1 of the invention.

Although the effective value of the input voltage to be input to the converter changes gradually with the fluctuation of a load capacity, it hardly changes in a short time on the order of the cycle of an input power source because a power source capacity through the transformer 200 is large. Therefore, the fluctuation of the input power to the converter is solely reflected upon the effective value of an input current.
It is accordingly to be understood that, in the power feed circuit of Embodiment 3 of the invention, almost the same circuit operations as in the power feed circuit of Embodiment 1 can be performed in spite of the omission of the AC voltage detector 13. With the power feed circuit in Embodiment 3 of the invention, therefore, it is possible to attain the advantage that the unbalance of the load balance of the individual converters 100 can be eliminated, without employing the AC voltage detectors 13.

### Embodiment 4:

In the power feed circuit which employs the converter control apparatus in any of Embodiment 1 through Embodiment 3 of the invention, and the plurality of converters, the input power and output power of the converter 100 are measured, and hence, voltage regulation against the load fluctuation is realized by employing the output power control circuit which is configured of the input power calculation portion 16, output power calculation portion 17 and pulse width determination portion 18 disposed within each converter 100, and the average processing portion 19.

As described in Embodiment 2 or Embodiment 3, however, even if the input power or output power fed to or from each converter changes, its input voltage or output voltage hardly changes in the short time on the order of the cycle of the input power source. It is therefore to be understood that the output power (equal to the input power) of the power waveform conversion circuit 11 can be controlled to equalize to the average output power, by inputting a signal which depends upon the input current or a average output current, to the pulse width determination portion 18a instead of the input power or the average output power.
Accordingly, a power feed circuit in Embodiment 4 of the invention can perform almost the same operations as in the power feed circuit in Embodiment 1.

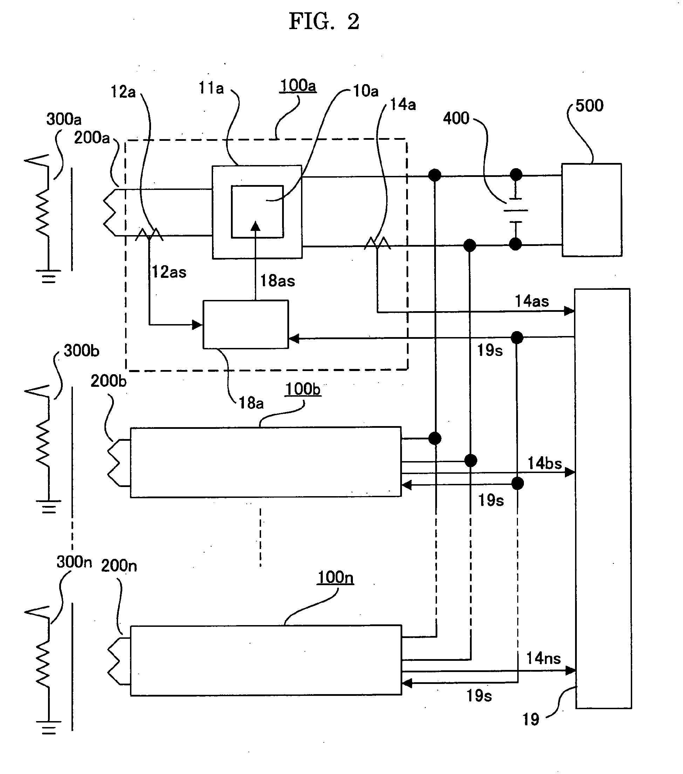

Fig. 2 shows a schematic configurational circuit diagram of the power feed circuit in Embodiment 4 which employs a converter control apparatus in the invention and a plurality of converters. Incidentally, identical components or equivalent portions to those in Figs. 1 and 2 are assigned identical numerals and signs.
Regarding the average output current, DC current signals 14as through 14ns which are respectively output from DC current meters 14a through 14n disposed within the individual converters 100a through 100n are all input to a average processing portion 19, and they are added up, whereupon the sum is divided by the number (n) of the attached converters, whereby a average DC current per converter is calculated and is output as a average output signal 19s.

As seen from Fig. 2, in Embodiment 4 of the invention, an AC voltage detector 13 as well as a DC voltage detector 15 and an input power calculation portion 16 as well as an output power calculation portion 17 can be omitted, and it is therefore possible to attain the remarkable advantage that the circuit configuration of the power feed circuit can be simplified.
That is, the converter control apparatus in Embodiment 4 of the invention is configured of AC current detectors 12 as well as the DC detectors 14, pulse width determination portions 18a through 18n which are output power control circuits disposed within the respective converters 100a through 100n, and the average processing portion 19 which is an arithmetic circuit, and the configuration is very simple.

### Embodiment 5:

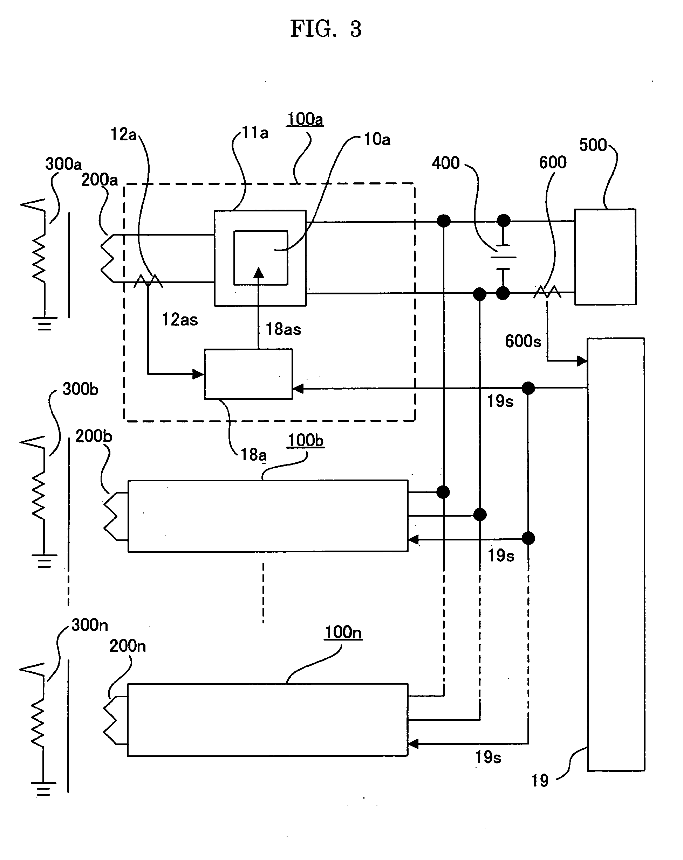

Fig. 3 shows a schematic configurational diagram of a power feed circuit in Embodiment 5 which employs a converter control apparatus in the invention and a plurality of converters. Incidentally, identical components or equivalent portions to those in Figs. 1 and 3 are assigned identical numerals and signs. The point of difference between Fig. 2 showing the power feed circuit in Embodiment 4 and Fig. 3 showing the power feed circuit in Embodiment 5 is that, in Fig. 2, the plurality of DC current meters 14 are disposed within the respective converters 100, whereas in Fig. 3, a single DC current meter 600 is interposed between a filter capacitor 400 and a load. The remaining configuration of Embodiment 5 is the same as in Embodiment 4. In Embodiment 5, however, a DC current signal 600s output from the DC current meter 600 is input to a average processing portion 19, and it is divided by the number (n) of the converters, whereby a average DC current per converter is calculated to be output as a average output signal 19s.
This is for controlling the output power (equal to the input power) of a power waveform conversion circuit 11 to equalize to average output power. Therefore, the power feed circuit in Embodiment 5 of the invention performs substantially the same operations as those of the power feed circuit in Embodiment 4 while decreasing the number of the DC current meters employed, and it can attain the advantage that the unbalance of the load balance of the individual converters can be eliminated.

By the way, in each of Embodiment 1 through Embodiment 3, the input powers and output powers of the individual converters or the output power from all the converters are/is measured in order to eliminate the unbalance of the load balance of the individual converters 100. In Embodiment 1, the AC current detector 12a, AC voltage detector 13a, DC current detector 14a and DC voltage detector 15a are disposed within each converter 100 in order to measure the input/output powers. In contrast, in Embodiment 4, the power feed circuit is realized merely by disposing the AC current detector 12a and the DC current detector 14a within each converter 100, in consideration of the characteristic of the power feed circuit forming this embodiment.
It is accordingly to be understood that a power feed circuit which has substantially the same performance as that of the power feed circuit in any of Embodiment 1 through Embodiment 5 of the invention can be configured by employing any detector or detection circuit which is capable of detecting a signal dependent upon the input powers and output powers of the individual converters or the output power from all the converters, in consideration of the configuration and characteristic of the power feed circuit employed.

### Embodiment 6:

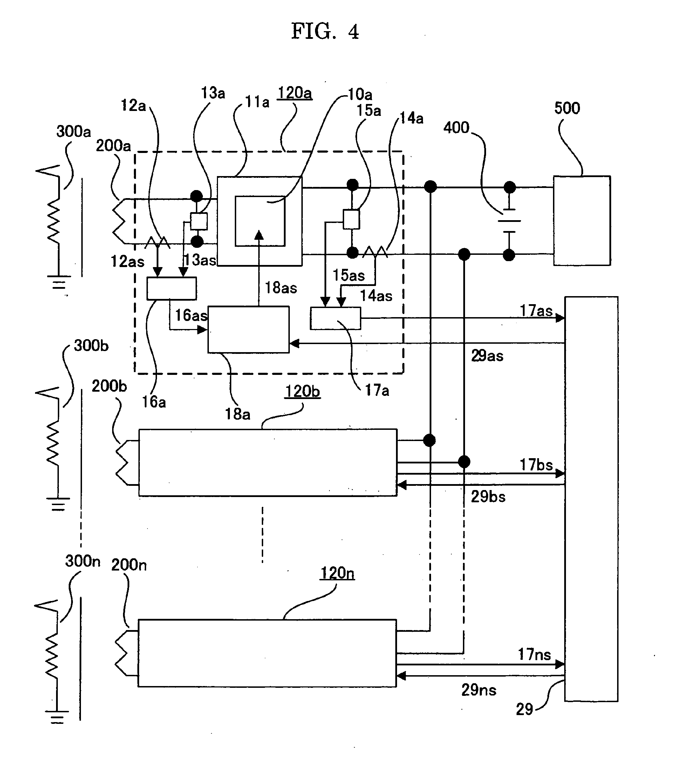

Fig. 4 shows a schematic configurational circuit diagram of a power feed circuit which employs a converter control apparatus in Embodiment 6 of the invention and a plurality of converters 120 of different types (in which device structures and ratings are different). Incidentally, identical components or equivalent portions to those in Figs. 1 through 3 are assigned identical numerals and signs.
The schematic configurational circuit diagram of Fig. 1 referred to in Embodiment 1 shows the circuit which employs the plurality of converters 100 of the identical type (in which the device structures and ratings are the same). The points of difference of Fig. 4 from Fig. 1 are that the individual converters are the converters 120a through 120n of the different types, and that an arithmetic circuit for controlling them is a distribution processing portion 29, from which a plurality of distribution processing signals 29as through 29ns are output and respectively fed to the corresponding converters 120a through 120n. The remaining configuration of Embodiment 6 is the same as in Embodiment 1. The operations of the distribution processing portion 19 and the distribution processing signals 29s output therefrom will be described below.

Output power signals 17as through 17ns which correspond to the output powers of the respective converters 120a through 120n are input to the distribution processing portion 29 of the converter control apparatus for use in Embodiment 6 of the invention. The distribution processing portion 29 calculates load power to be fed to a load 500, from the individual output power signals 17s, and on the basis of the calculated load power, it calculates the distribution output powers of the individual converters 120a through 120n required for distributively feeding powers equal to the load power, within the rated ranges of the respective converters, so as to output the distribution processing signals 29as through 29ns corresponding to the distribution output powers.
The distribution processing signals 29as through 29ns are respectively input to pulse width determination portions 18a through 18n which are output power control circuits within the individual converters 120a through 120n. The pulse width determination portions 18 within the individual converters 120 control the output powers of the respective converters 120a through 120n so as to equalize to the distribution output powers, in accordance with information which the distribution processing signals 29s have.

Thus, in the power feed circuit in Embodiment 6 of the invention, even when the plurality of converters 120 of the different types are connected in parallel with the load 500, the output powers to be fed from the individual converters to the load 500 do not exceed the rated ranges of the respective converters. As a result, it can be prevented that some of the converters fall into an overload state, and it is possible to attain the remarkable advantage that the unbalance of the load balance of the individual converters can be suppressed.

By the way, in each of Embodiment 1 through Embodiment 6, the converters each having the power waveform conversion circuit based on the PWM control system have been described, but the PWM control system need not always be employed in performing power waveform conversion. It is to be understood that, as long as the power waveform conversion can be performed even by any other control system, advantages equivalent to those of Embodiment 1 through Embodiment 6 can be attained.
In short, the converter control apparatus of this invention detects signals dependent upon the output powers of individual converters, and may be provided with an arithmetic circuit which calculates the average output power (or distributed output powers) of the individual converters on the basis of the detected signals, and it may include output power control circuits which control the output powers of the individual converters so as to equalize to the average output power (or the distributed output powers), in systems conforming to the control systems of the respective converters.

### Brief Description of the Drawings

- Fig. 1: is a schematic configurational circuit diagram of a power feed circuit which employs a converter control apparatus for use in Embodiment 1 of the present invention, and a plurality of converters.
- Fig. 2: is a schematic configurational circuit diagram of a power feed circuit which employs a converter control apparatus for use in Embodiment 4 of the invention, and a plurality of converters.
- Fig. 3: is a schematic configurational circuit diagram of a power feed circuit which employs a converter control apparatus for use in Embodiment 5 of the invention, and a plurality of converters.
- Fig. 4: is a schematic configurational circuit diagram of a power feed circuit which employs a converter control apparatus for use in Embodiment 6 of the invention, and a plurality of converters.

### Description of Reference Numerals and Signs

- 10: switching circuit portion
- 11: power waveform conversion circuit
- 12: AC current detector
- 13: AC voltage detector
- 14: DC current detector
- 15: DC voltage detector
- 16s: input power signal
- 17s: output power signal
- 18: pulse width determination portion (output power control circuit)
- 18s: pulse width signal
- 19: average processing portion (arithmetic circuit)
- 19s: average output signal
- 29: distribution processing portion (arithmetic circuit)
- 29s: distribution output signal
- 100: converters of identical type
- 120: converters of different types
- 500: load

## Claims

1. A converter control apparatus **characterized by** comprising a plurality of converters which are connected in parallel with a load, means for detecting output powers of the converters, an arithmetic circuit which calculates average output power of the individual converters on the basis of the detected output powers, and output power control circuits which control the output powers of the individual converters so as to equalize to the average output power.

2. A converter control apparatus **characterized by** comprising a plurality of converters which are connected in parallel with a load, means for detecting signals dependent upon output powers of the converters, an arithmetic circuit which calculates average output power of the individual converters on the basis of the detected signal values, and output power control circuits which control the output powers of the individual converters so as to equalize to the average output power.

3. A converter control apparatus **characterized by** comprising a plurality of converters which are connected in parallel with a load, means for detecting output powers of the converters, an arithmetic circuit which calculates load power from the detected output powers and which calculates individual distributed output powers for distributing powers equal to the load power, within rated ranges of the individual converters, and output power control circuits which control the output powers of the individual converters so as to equalize to the respective distributed output powers.

4. A converter control apparatus **characterized by** comprising a plurality of converters which are connected in parallel with a load, means for detecting signals dependent upon output powers of the converters, an arithmetic circuit which calculates load power from the signals dependent upon the detected output powers and which calculates individual distributed output powers for distributing powers equal to the load power, within rated ranges of the individual converters, and output power control circuits which control the output powers of the individual converters so as to equalize to the respective distributed output powers.

5. A converter control apparatus as defined in claim 2 or claim 4, **characterized in that** the signals dependent upon the output powers of the converters are signals based on the output currents of the converters.
